# EUROPEAN PATENT APPLICATION

(11) **EP 3 537 036 A1**
(43) Date of publication of application: **11.09.2019**
(21) Application number: 19160531.0
(22) Date of filing: 04.03.2019
(51) Int. Cl.: F21V 8/00

(54) **LIGHT SOURCE MODULE AND SURFACE LIGHT SOURCE ASSEMBLY THEREOF**

(30) Priority: 06.03.2018 CN 201810182160
(71) Applicant: Coretronic Corporation, Hsin-Chu 300 (TW)
(72) Inventor: HUANG, YU-AN, 300 Hsin-Chu (TW)
(74) Representative: Ter Meer Steinmeister & Partner

(57) **Abstract**

A surface light source assembly includes a light emitting element, a light guide plate and a quantum dot layer. The light emitting element has an annular light emitting side surface. The light guide plate has a bottom surface and a light exit surface opposite to each other. The bottom surface has an accommodating groove for receiving the light emitting element. The accommodating groove has a light incident surface. The light incident surface surrounds the annular light emitting side surface. The quantum dot layer surrounds the annular light emitting side surface.

## Description

THIS APPLICATION CLAIMS THE PRIORITY OF CHINA APPLICATION (CN201810182160.0 FILED ON 2018/03/06).

### FIELD OF THE INVENTION

The invention relates to a light source module, and more particularly to a light source module and a surface light source assembly capable of providing a surface light source.

### BACKGROUND OF THE INVENTION

The liquid crystal display panel of the liquid crystal display device does not emit light, so the surface light source needs to be provided by the backlight module. The backlight module includes a direct type backlight module and a side type backlight module. In the conventional side type backlight module, the light emitting diode light strip is disposed on the side of the light guide plate. The light guide plate is internally provided with a plurality of dots. After the light provided by the light emitting diode light strip enters the light guide plate, the light exits from the light guide plate through the dots. However, because the light emitting diode light strip is arranged on the side of the light guide plate, there is a problem of uneven brightness and therefore is not conducive to local dimming.

In the conventional direct type backlight module, a plurality of light emitting diodes are arranged in a two-dimensional array and are disposed under the diffusion plate. Compared with the side type backlight module, the direct type backlight module has better brightness uniformity and is beneficial to the local dimming, but there is a problem that the thickness is relatively thick.

In addition, in order to improve the color performance, the conventional backlight module uses a quantum dot film disposed above the diffusion plate, but the size of the quantum dot film needs to correspond to the size of the diffusion plate, and thus there is a problem of high cost. The quantum dot film is composed of a quantum dot layer and the protective layers disposed on the upper and lower sides of the quantum dot layer. However, since the perimeter of the quantum dot layer has no protection of protective layer, a failure zone with a width of 1 to 2 mm may be formed due to the affection of moisture, and therefore is not suitable for products with narrow frames.

The information disclosed in this "BACKGROUND OF THE INVENTION" section is only for understanding of the background of the invention and therefore it may contain information that does not form the prior art that is already known to a person of ordinary skill in the art. Furthermore, the information disclosed in this "BACKGROUND OF THE INVENTION" section does not mean that one or more problems to be solved by one or more embodiments of the invention were acknowledged by a person of ordinary skill in the art.

### SUMMARY OF THE INVENTION

The invention provides a surface light source assembly to reduce thickness and cost.

The invention further provides a light source module to reduce thickness and cost.

Other objectives and advantages of the invention can be further understood from the technical features disclosed in the invention.

The object is solved by the features of the independent claims. Preferred embodiments are given in the dependent claims.

In order to achieve one or partial or all of the above or other objectives, a surface light source assembly provided by an embodiment of the invention includes a light emitting element, a light guide plate and a quantum dot layer. The light emitting element has an annular light emitting side surface. The light guide plate has a bottom surface and a light exit surface opposite to each other. The bottom surface has an accommodating groove for receiving the light emitting element. The accommodating groove has a light incident surface. The light incident surface surrounds the annular light emitting side surface. The quantum dot layer surrounds the annular light emitting side surface.

In order to achieve one or partial or all of the above or other objectives, a light source module provided by an embodiment of the invention includes a plurality of surface light source assemblies. Each of the surface light source assemblies includes a light emitting element, a light guide plate and a quantum dot layer. The light emitting element has an annular light emitting side surface. The light guide plate has a bottom surface and a light exit surface opposite to each other. The bottom surface has an accommodating groove for receiving the light emitting element. The accommodating groove has a light incident surface. The light incident surface surrounds the annular light emitting side surface. The quantum dot layer surrounds the annular light emitting side surface. The light guide plates of the surface light source assemblies are spliced together. Preferably, the bottom surface of the light guide plate further has an annular groove.

In some embodiments, the annular groove surrounds the accommodating groove.

In some embodiments, the quantum dot layer is disposed in the annular groove.

In some embodiments, the surface light source assembly further comprises a protective layer.

Preferably, the protective layer covers a surface of the quantum dot layer exposed by the annular groove.

Preferably, the quantum dot layer is disposed in the accommodating groove and is located between the light incident surface and the annular light emitting side surface.

Preferably, the surface light source assembly further comprises a light-transmissive tube.

Preferably, the light-transmitting tube envelops the quantum dot layer.

Preferably, the light emitting element comprises a blue light emitting diode.

Preferably, the quantum dot layer comprises a red quantum dot and a green quantum dot.

In some embodiments, the light emitting element comprises a blue light emitting diode and a red phosphor layer covering the blue light emitting diode, and the quantum dot layer comprises a green quantum dot.

In some embodiments, the quantum dot layer comprises a plurality of scattering particles.

In some embodiments, each of the scattering particles has a diameter of 3 to 10 µm.

In some embodiments, the quantum dot layer has a light-emitting full width of half maximum (FWHM) of 20 to 60 nm.

In some embodiments, the surface light source assembly further comprises a substrate

Preferably, the substrate is disposed under the bottom surface of the light guide plate and carries the light emitting element.

Preferably, a reflective layer is disposed on a side of the substrate facing the bottom surface of the light guide plate.

Preferably, the light exit surface of the light guide plate is a convex surface.

Preferably, the light emitting element comprises a top surface and a lower surface disposed opposite to each other.

Preferably, the lower surface is adjacent to the bottom surface of the light guide plat.

Preferably, the annular light emitting side surface is connected between the top surface and the lower surface, and the top surface does not emit light.

In summary, in the surface light source assembly of the embodiment of the invention, since the light emitting element is disposed in the accommodating groove of the bottom surface of the light guide plate, the thickness of the surface light source assembly can be reduced. In addition, since the quantum dot layer only needs to surround the annular light emitting side surface of the light emitting element, the size of the quantum dot layer can be greatly reduced and the cost can be reduced. The light source module of the embodiment of the invention employs a plurality of the surface light source assemblies described above, and therefore the light source module of the embodiment of the invention not only has the advantage of having a thinner thickness and a lower cost but also can achieve the function of local dimming.

Other objectives, features and advantages of the invention will be further understood from the further technological features disclosed by the embodiments of the invention wherein there are shown and described preferred embodiments of this invention, simply by way of illustration of modes best suited to carry out the invention.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a schematic cross-sectional view of a surface light source assembly according to an embodiment of the invention;
FIG. 2 is a schematic bottom view of the light emitting element, the light guide plate and the quantum dot layer in FIG. 1;
FIG. 3 is a schematic cross-sectional view of a surface light source assembly according to another embodiment of the invention;
FIG. 4 is a schematic cross-sectional view of a surface light source assembly according to another embodiment of the invention; and
FIG. 5 is a schematic top view of a light source module according to an embodiment of the invention.

### DETAILED DESCRIPTION OF PREFERRED EMBODIMENTS

In the following detailed description of the preferred embodiments, reference is made to the accompanying drawings which form a part hereof, and in which is shown by way of illustration specific embodiments in which the invention may be practiced. In this regard, directional terminology, such as "top", "bottom", "front", "back", etc., is used with reference to the orientation of the Figure(s) being described. The components of the invention can be positioned in a number of different orientations. As such, the directional terminology is used for purposes of illustration and is in no way limiting. On the other hand, the drawings are only schematic and the sizes of components may be exaggerated for clarity. It is to be understood that other embodiments may be utilized and structural changes may be made without departing from the scope of the invention. Also, it is to be understood that the phraseology and terminology used herein are for the purpose of description and should not be regarded as limiting. The use of "including", "comprising", or "having" and variations thereof herein is meant to encompass the items listed thereafter and equivalents thereof as well as additional items. Unless limited otherwise, the terms "connected", "coupled", and "mounted" and variations thereof herein are used broadly and encompass direct and indirect connections, couplings, and mountings. Similarly, the terms "facing," "faces" and variations thereof herein are used broadly and encompass direct and indirect facing, and "adjacent to" and variations thereof herein are used broadly and encompass directly and indirectly "adjacent to". Therefore, the description of "A" component facing "B" component herein may contain the situations that "A" component directly faces "B" component or one or more additional components are between "A" component and "B" component. Also, the description of "A" component "adjacent to" "B" component herein may contain the situations that "A" component is directly "adjacent to" "B" component or one or more additional components are between "A" component and "B" component. Accordingly, the drawings and descriptions will be regarded as illustrative in nature and not as restrictive.

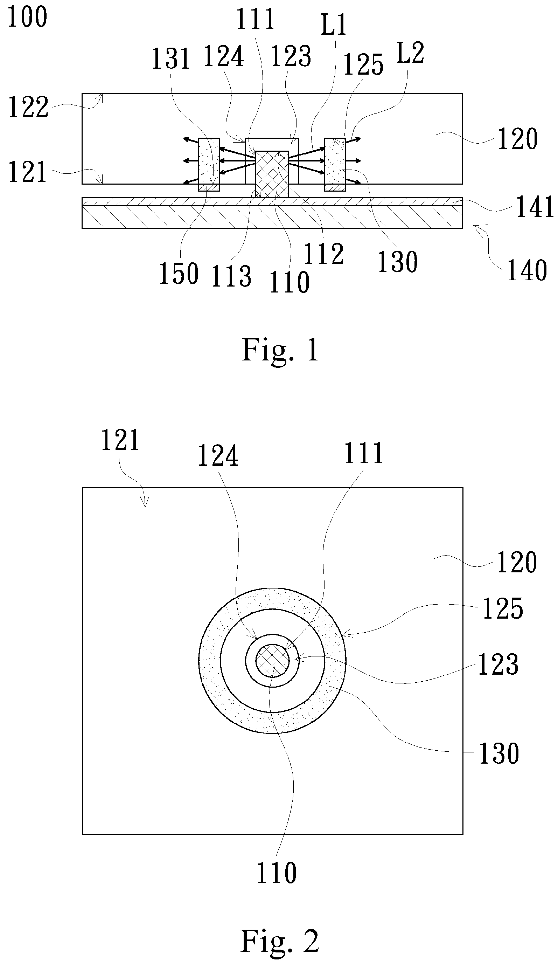

FIG. 1 is a schematic cross-sectional view of a surface light source assembly according to an embodiment of the invention, and FIG. 2 is a schematic bottom view of the light emitting element, the light guide plate and the quantum dot layer in FIG. 1. Referring to FIGS. 1 and 2, the surface light source assembly 100 of the embodiment includes a light emitting element 110, a light guide plate 120 and a quantum dot layer 130. The light emitting element 110 has an annular light emitting side surface 111. The light guide plate 120 has a bottom surface 121 and a light exit surface 122 opposite to each other. The bottom surface 121 has an accommodating groove 123 for receiving the light emitting element 110. The accommodating groove 123 has a light incident surface 124. The light incident surface 124 surrounds the annular light emitting side surface 111. The quantum dot layer 130 surrounds the annular light emitting side surface 111.

In the embodiment, the light emitting element 110 is, for example, a light emitting diode, but is not limited thereto. The light emitting element 110 includes a top surface 112 and a lower surface 113 disposed opposite to each other. The lower surface 113 is adjacent to the bottom surface 121 of the light guide plate 120. The annular light emitting side surface 111 is connected between the top surface 112 and the lower surface 113. The top surface 112 does not emit light. In addition, the surface light source assembly 100 may further include a substrate 140 disposed under the bottom surface 121 of the light guide plate 120 and for carrying the light emitting element 110. The lower surface 113 of the light emitting element 110 is, for example, fixed on the substrate 140. The substrate 140 is, for example, a circuit board and can be used to drive the light emitting element 110 to emit light. The material of the substrate 140 includes aluminum oxide (Al₂O₃) and/or aluminum nitride (AlN), but is not limited thereto. In addition, a reflective layer 141 may be disposed on a side of the substrate 140 facing the bottom surface 121 of the light guide plate 120 to reflect the light leaked from the bottom surface 121 of the light guide plate 120. The reflective layer 141 may be a white reflective sheet, a silver reflective sheet, or a TiO₂ reflective layer, but is not limited thereto.

The bottom surface 121 of the light guide plate 120 of the embodiment further has, for example, an annular groove 125 surrounding the accommodating groove 123, and the quantum dot layer 130 is disposed in the annular groove 125. The quantum dot layer 130 includes a substrate and a plurality of quantum dots located in the substrate. In the embodiment, the quantum dot layer 130 further includes a plurality of scattering particles, and each scattering particle has a diameter of 3 to 10 µm.

In the embodiment, since the top surface 112 of the light emitting element 110 does not emit light, the light L1 emitted from the annular light emitting side surface 111 of the light emitting element 110 enters the light guide plate 120 through the light incident surface 124 surrounding the annular light emitting side surface 111 and is transmitted to the quantum dot layer 130. Part of the light L1 is absorbed by the quantum dot layer 130 and converted into light L2 of another color, and the other part of light L1 and the converted light L2 are mixed and then emitted from the light exit surface 122 of the light guide plate 120. In an embodiment, the light emitting element 110 includes a blue light emitting diode, and the emitted light L1 is, for example, blue light. The quantum dot layer 130 includes red quantum dots and green quantum dots, and can convert blue light into red light and green light. Thus, red light, green light and blue light not absorbed by the quantum dot layer 130 can be mixed into white light. In another embodiment, the light emitting element 110 includes a blue light emitting diode (not shown) and a red phosphor layer (not shown) covering the blue light emitting diode. Part of the blue light emitted by the blue light emitting diode is converted into red light by the red phosphor layer, and therefore the light L1 emitted by the light emitting element 110 includes red light and blue light. The quantum dot layer 130 includes green quantum dots, and part of blue light may be converted into green light, such that the red light, green light and blue light not absorbed by the quantum dot layer 130 can be mixed into white light.

In the surface light source assembly 100 of the embodiment, since the light emitting element 110 is disposed in the accommodating groove 123 of the bottom surface 121 of the light guide plate 120, the thickness of the surface light source assembly 110 can be reduced. In addition, since the quantum dot layer 130 is disposed in the annular groove 125 of the light guide plate 120 without the need of being disposed corresponding to the light exit surface 122 of the entire light guide plate 120, so the material of the quantum dot layer 130 can be saved and the cost can be reduced. In addition, since the quantum dot layer 130 disposed in the annular groove 125 of the light guide plate 120 can be regarded as being enveloped with the light guide plate 120, the moisture of the external environment can be isolated by the light guide plate 120, so that the quantum dot layer 130 is prevented from getting wet. Therefore, the protective films disposed on the upper and lower sides of the quantum dot layer 130 in the conventional quantum dot film can be omitted to further reduce the cost. Since only the surface 131 of the quantum dot layer 130 exposed by the annular groove 125 is not enveloped by the light guide plate 120, the overall performance of the surface light source assembly 100 will not have much influence even if the surface 131 is damped to produce a failure zone with thickness of 1 to 2 mm (wherein the thickness direction is from the surface 131 toward the light exit surface 122). The surface light source assembly 100 can also be applied to products with narrow frames. To further avoid moisture, the surface light source assembly 100 may further include a protective layer 150 covering the surface 131 of the quantum dot layer 130 exposed by the annular groove 125.

It is to be noted that in order to further enhance the color performance, a quantum dot layer 130 having a light-emitting full width of half maximum (FWHM) of 20 to 60 nm may be selected, such as a chromium selenide (CdSe) quantum dot layer. In this way, 90% of the color gamut of Rce.2020 can be achieved.

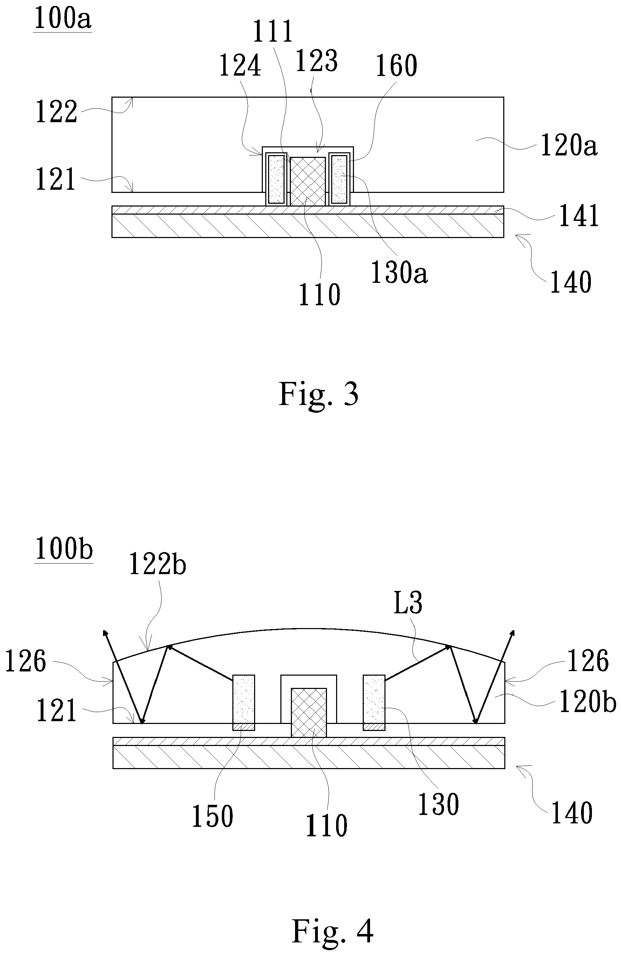

FIG. 3 is a schematic cross-sectional view of a surface light source assembly according to another embodiment of the invention. Referring to FIG. 3, the surface light source assembly 100a of the embodiment is similar to the surface light source assembly 100 described above, and only the main differences will be described below. In the surface light source assembly 100a, the quantum dot layer 130a is disposed in the accommodating groove 123 of the light guide plate 120a and is located between the light incident surface 124 of the accommodating groove 123 and the annular light emitting side surface 111 of the light emitting element 110. Therefore, the light guide plate 120a does not need to have the annular groove 125 in FIG. 1. In addition, the surface light source assembly 100a may further include a light-transmissive tube 160 enveloping the quantum dot layer 130a to prevent the quantum dot layer 130a from getting wet.

FIG. 4 is a schematic cross-sectional view of a surface light source assembly according to another embodiment of the invention. Referring to FIG. 4, the surface light source assembly 100b of the embodiment is similar to the surface light source assembly 100 of FIG. 1. The main difference is that the light exit surface 122b of the light guide plate 120b of the surface light source assembly 100b is a convex surface. Specifically, the height of the light exit surface 122b gradually decreases from the center to the side surface 126, and the convex surface may be a curved surface or include a slope or a plurality of slopes inclined from the center toward the side surface 126.

Since the light exit surface 122b is a convex surface, the incident angle of light (such as light L3) in the light guide plate 120b on the light exit surface 122b can be changed, so that the light L3 that would have been totally reflected to the side surface 126 of the light guide plate 120b and leaked from the side surface 126 when the light exit surface 122b is planar is reflected to the bottom surface 121 of the light guide plate 120b and reflected by the bottom surface 121 to exit from the light exit surface 122b, so as to improve the problem of light leakage from the side surface 126 of the light guide plate 120b. The light emit surface 122 of the light guide plate 120a of the surface light source assembly 100a of FIG. 3 may also be a convex surface.

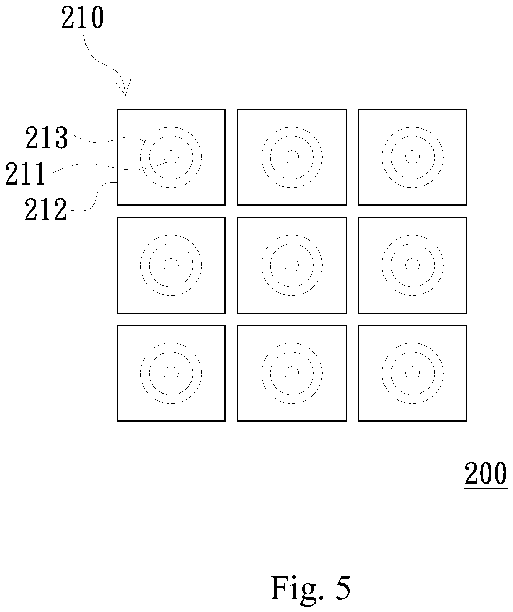

FIG. 5 is a schematic top view of a light source module according to an embodiment of the invention. Referring to FIG. 5, the light source module 200 of the embodiment includes a plurality of surface light source assemblies 210. Each surface light source assembly 210 includes a light emitting element 211, a light guide plate 212 and a quantum dot layer 213. The light guide plates 212 of the surface light source assemblies 210 are spliced together to form a large-sized light guide structure. In an embodiment, the light guide plates 212 may be integrated into one piece. In addition, the surface light source assembly 210 may be selected from the surface light source assembly of any of the above embodiments, such as the surface light source assembly 100, 100a or 100b. Therefore, the light source module 200 of the embodiment not only has the advantages of thinner thickness and lower cost but also can achieve the function of local dimming.

In summary, in the surface light source assembly of the embodiment of the invention, since the light emitting element is disposed in the accommodating groove of the bottom surface of the light guide plate, the thickness of the surface light source assembly can be reduced. In addition, since the quantum dot layer only needs to surround the annular light emitting side surface of the light emitting element, the size of the quantum dot layer can be greatly reduced and the cost can be reduced. The light source module of the embodiment of the invention employs a plurality of the surface light source assemblies described above, and therefore the light source module of the embodiment of the invention not only has the advantage of having a thinner thickness and a lower cost but also can achieve the function of local dimming.

The foregoing description of the preferred embodiment of the invention has been presented for purposes of illustration and description. It is not intended to be exhaustive or to limit the invention to the precise form or to exemplary embodiments disclosed. Accordingly, the foregoing description should be regarded as illustrative rather than restrictive. Obviously, many modifications and variations will be apparent to practitioners skilled in this art. The embodiments are chosen and described in order to best explain the principles of the invention and its best mode practical application, thereby to enable persons skilled in the art to understand the invention for various embodiments and with various modifications as are suited to the particular use or implementation contemplated. It is intended that the scope of the invention be defined by the claims appended hereto and their equivalents in which all terms are meant in their broadest reasonable sense unless otherwise indicated. Therefore, the term "the invention", "the invention" or the like is not necessary limited the claim scope to a specific embodiment, and the reference to particularly preferred exemplary embodiments of the invention does not imply a limitation on the invention, and no such limitation is to be inferred. The invention is limited only by the scope of the appended claims. Moreover, these claims may refer to use "first", "second", etc. following with noun or element. Such terms should be understood as a nomenclature and should not be construed as giving the limitation on the number of the elements modified by such nomenclature unless specific number has been given. The abstract of the disclosure is provided to comply with the rules requiring an abstract, which will allow a searcher to quickly ascertain the subject matter of the technical disclosure of any patent issued from this disclosure. It is submitted with the understanding that it will not be used to interpret or limit the scope or meaning of the claims. Any advantages and benefits described may not apply to all embodiments of the invention. It should be appreciated that variations may be made in the embodiments described by persons skilled in the art without departing from the scope of the invention as defined by the following claims. Moreover, no element and component in the disclosure is intended to be dedicated to the public regardless of whether the element or component is explicitly recited in the following claims. Furthermore, the terms such as the first stop part, the second stop part, the first ring part and the second ring part are only used for distinguishing various elements and do not limit the number of the elements.

## Claims

1. A surface light source assembly, comprising:
a light emitting element (110), having an annular light emitting side surface (111);
a light guide plate (120), having a bottom surface (121) and a light exit surface (122) opposite to each other,
wherein the bottom surface (121) has an accommodating groove (123) for receiving the light emitting element (110), the accommodating groove (123) has a light incident surface (124), and the light incident surface (124) surrounds the annular light emitting side surface (111); and
a quantum dot layer (130), surrounding the annular light emitting side surface (111).

2. The surface light source assembly according to claim 1, wherein the bottom surface (121) of the light guide plate (120) further has an annular groove (125), the annular groove (125) surrounds the accommodating groove (123),

3. The surface light source assembly according to claim 2, wherein the quantum dot layer (130) is disposed in the annular groove (125).

4. The surface light source assembly according to claim 2 or 3, further comprising a protective layer (150), wherein the protective layer (150) covers a surface of the quantum dot layer (130) exposed by the annular groove (125).

5. The surface light source assembly according to claim 1, wherein the quantum dot layer (130a) is disposed in the accommodating groove (123) and is located between the light incident surface (124) and the annular light emitting side surface (111).

6. The surface light source assembly according to claim 5, further comprising a light-transmissive tube (160), and the light-transmitting tube (160) envelops the quantum dot layer (130a).

7. The surface light source assembly according to claim 1, wherein the light emitting element (110) comprises a blue light emitting diode, and the quantum dot layer (130) comprises a red quantum dot and a green quantum dot.

8. The surface light source assembly according to claim 1, wherein the light emitting element (110) comprises a blue light emitting diode and a red phosphor layer covering the blue light emitting diode, and the quantum dot layer (130) comprises a green quantum dot.

9. The surface light source assembly according to any one of the preceding claims, wherein the quantum dot layer (130, 130a)) comprises a plurality of scattering particles, and each of the scattering particles has a diameter of 3 to 10 µm.

10. The surface light source assembly according to any one of the preceding claims , wherein the quantum dot layer (130) has a light-emitting full width of half maximum (FWHM) of 20 to 60 nm.

11. The surface light source assembly according to any one of the preceding claims, further comprising a substrate (140), wherein the substrate (140) is disposed under the bottom surface (121) of the light guide plate (120) and carries the light emitting element (110).

12. The surface light source assembly according to claim 11, wherein a reflective layer (141) is disposed on a side of the substrate (140) facing the bottom surface (121) of the light guide plate (120).

13. The surface light source assembly according to any one of the preceding claims, wherein the light exit surface (122) of the light guide plate (120) is a convex surface.

14. The surface light source assembly according to claim 1, wherein the light emitting element (110) comprises a top surface (112) and a lower surface (113) disposed opposite to each other, the lower surface (113) is adjacent to the bottom surface (121) of the light guide plate (120), the annular light emitting side surface (111) is connected between the top surface (112) and the lower surface (113), and the top surface (112) does not emit light.

15. A light source module (200) comprising a plurality of surface light source assemblies (210) as claimed in any one of the preceding claims,
wherein the light guide plates (212) of the surface light source assemblies (210) are spliced together.
